# EUROPEAN PATENT SPECIFICATION

(11) **EP 2 669 601 B1**
(45) Date of publication and mention of the grant of the patent: **28.11.2018**
(21) Application number: 13168564.6
(22) Date of filing: 21.05.2013
(51) Int. Cl.: F25B 15/02, F25B 27/02, F01N 3/00

(54) **Composite absorption type heat pump device**
Zusammengesetzte Absorptionswärmepumpenvorrichtung
Dispositif de pompe à chaleur de type à absorption composite

(30) Priority: 29.05.2012 JP 2012121572
(43) Date of publication of application: 04.12.2013
(73) Proprietor: AISIN SEIKI KABUSHIKI KAISHA, Kariya-shi, Aichi 448-8650 (JP)
(72) Inventor: Tsubouchi, Osamu, Kariya-shi, Aichi 448-8650 (JP)
(74) Representative: Kramer Barske Schmidtchen Patentanwälte PartG mbB

(56) References cited:
- DE-A1-102007 051 868
- KR-A- 20120 025 664
- US-A- 4 439 999
- US-A- 4 813 242

## Description

This disclosure relates to an absorption type heat pump (absorption type refrigerating machine).

### BACKGROUND DISCUSSION

As a method of efficiently using heat (exhaust heat) generated in an engine, a technology of using exhaust gas which flows out from an engine for an absorption type heat pump is known (for example, see JP 2009-262806A). In the technology introduced in JP 2009-262806A, sensible heat of the exhaust gas is recovered and used as a heat source of the absorption type heat pump.

US 4,439,999 shows a device according to the preamble of claim 1, a combination of an internal combustion engine and an absorption type refrigeration system which is designed to make a simultaneous use of both of the engine exhaust gas and the heated engine cooling water. The internal combustion engine and the absorption type refrigeration system are combined such that the exhaust gas is utilized as the heat source for a gaseous refrigerant generator having the highest operating temperature in the system while heated engine cooling water is utilized as the heat source for another generator which operates at a temperature lower than the operating temperature of the first-mentioned generator.

However, even with such a technology, recovery efficiency of the exhaust heat of the engine has been low, and a technology of improving the recovery efficiency of the exhaust heat of the engine has been desired.

A need thus exists for a composite absorption type heat pump device which can improve recovery efficiency of exhaust heat of an engine by using an absorption heat pump.

### SUMMARY

In order to solve the above-described problem, according to an aspect of this disclosure, there is provided a composite absorption type heat pump device of this disclosure including an exhaust gas flow path unit through which exhaust gas of an engine flows; a regenerator which includes a regeneration unit which heats a mixed solution of an absorbing solution and a diluent by the exhaust gas, and separates the mixed solution heated in the regeneration unit into the diluent having a gas phase and the absorbing solution having a liquid phase; a condenser which includes a cooling path through which a coolant flows, and condenses the diluent to obtain the diluent having a liquid phase by performing heat exchange of the dilute having a gas phase obtained in the regenerator and the coolant; an evaporator which evaporates the diluent having a liquid phase obtained in the condenser to obtain the diluent having a gas phase; an absorber which causes the diluent to absorb the absorbing solution to obtain the mixed solution and supplies the obtained mixed solution to the regenerator, by bringing the absorbing solution having a liquid phase obtained in the regenerator in contact with the diluent having a gas phase obtained in the evaporator; and a cooler which cools the coolant by performing heat exchange of the coolant which flows through the cooling path and external air, in which the regeneration unit includes an exhaust heat recovery unit which includes an exchange unit which is communicated with the exhaust gas flow path unit and to which the exhaust gas flows in, and a mixed solution flow path unit which is thermally connected to the exchange unit and through which the mixed solution flows, and heats the mixed solution by performing heat exchange of the exhaust gas and the mixed solution and condenses vapor contained in the exhaust gas to obtain a condensed water, and a cooling unit which evaporates the condensed water obtained in the exhaust heat recovery unit, in the cooler.

The composite absorption type heat pump device of this disclosure is a device which includes the regenerator, the condenser, the evaporator, and the absorber, and includes a portion corresponding to a general absorption type heat pump (hereinafter, simply omitted as an absorption type heat pump, not otherwise specified), and the exhaust gas flow path unit through which exhaust gas flows, and integrates mechanisms (the exhaust heat recovery unit and the cooling unit) for recovering the exhaust heat of the exhaust gas with the regeneration unit of the absorption type heat pump. In the exhaust heat recovery unit, by heating the mixed solution (mixed solution of absorbing liquid and diluent) of the absorption type heat pump with sensible heat of the exhaust gas, and cooling the exhaust gas by the mixed solution, the vapor contained in the exhaust gas is condensed to recover the heat (condensed heat; latent heat), and the heat can be used in a heating step for the mixed solution necessary for operating the absorption type heat pump.

In addition, herein, the condensed water which is obtained by condensing the vapor is supplied to the cooler by the cooling unit and evaporated. By cold (vaporization heat; latent heat) generated at that time, a cooling action of the cooler is enhanced. That is, in this disclosure, as the exhaust heat of the exhaust gas, three kinds of sensible heat of entire exhaust gas, and latent heat of the water contained in the exhaust gas (condensed heat and vaporization heat) are used, and the exhaust heat thereof is used for the absorption type heat pump. Therefore, according to the composite absorption type heat pump device of this disclosure, it is possible to improve recovery efficiency of the exhaust heat of the engine, and also it is possible to improve heat efficiency of whole apparatus (for example, a vehicle, a power generation system for household use) including the engine and the absorption type heat pump.

The composite absorption type heat pump device of this disclosure preferably includes any one of (1) to (5) described below, and more preferable to include a plurality of them.
(1) The exhaust heat recovery unit includes a condensed water outlet which is an outlet of the condensed water, and an on-off valve capable of opening and closing the condensed water outlet, and the on-off valve closes the condensed water outlet, when an amount of the condensed water in the exhaust heat recovery unit is equal to or less than a predetermined amount.
(2) The exhaust heat recovery unit includes a filter unit for eliminating acid components contained in the exhaust gas and dissolved in the condensed water, in a flow path of the condensed water.
(3) The cooling unit includes an infusion element which transports the condensed water to the cooler, and the infusion element transports the condensed water by a capillary phenomenon.
(4) The cooler includes a fan for taking in the external air, the cooler includes an infusion element which transports the condensed water to the cooler, and the infusion element transports the condensed water to the cooler by dynamic pressure of the fan.
(5) The composite absorption type heat pump device is a composite absorption type heat pump for a vehicle, and includes an air intake duct which takes in external air, the cooling unit includes an infusion element which transports the condensed water to the cooler, and the infusion element transports the condensed water to the cooler by hydrostatic pressure of air generated in the air intake duct at the time of travelling.

According to the composite absorption type heat pump device of this disclosure, the exhaust heat from the exhaust gas of the engine may be efficiently recovered.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is an explanatory view showing a concept of an absorption type heat pump system with an exhaust heat recovery device of Embodiment 1 disclosed here; and
Fig. 2 is an enlarged view of main parts of Fig. 1.

### DETAILED DESCRIPTION

A composite absorption type heat pump device disclosed here can be applied to a device which includes an engine and needs to perform a cooling action obtained by an absorption type heat pump. For example, the composite absorption type heat pump device may be mounted on a vehicle such as an automobile, or may be provided on a building such as a house. In a case of using the composite absorption type heat pump device disclosed here as a device for a vehicle, it is possible to use exhaust heat of exhaust gas generated in an engine of a vehicle, and to air-condition a vehicle interior with a cooling action obtained by an absorption type heat pump. In a case of using the composite absorption type heat pump device disclosed here as a device for a building, it is possible to use exhaust heat of exhaust gas generated in a stationary type engine for power generation, and to air-condition an interior of the building with a cooling action obtained by an absorption type heat pump. Alternatively, the cooling action obtained by the absorption heat pump may be used in refrigerating devices such as refrigerator or a freezer. The engine may be an engine which generates exhaust gas containing vapor by combustion behavior, and fuel or structure thereof are not particularly limited.

Hereinafter, the composite absorption type heat pump device disclosed here will be explained with reference to detailed examples and the attached drawings.

### Embodiment 1

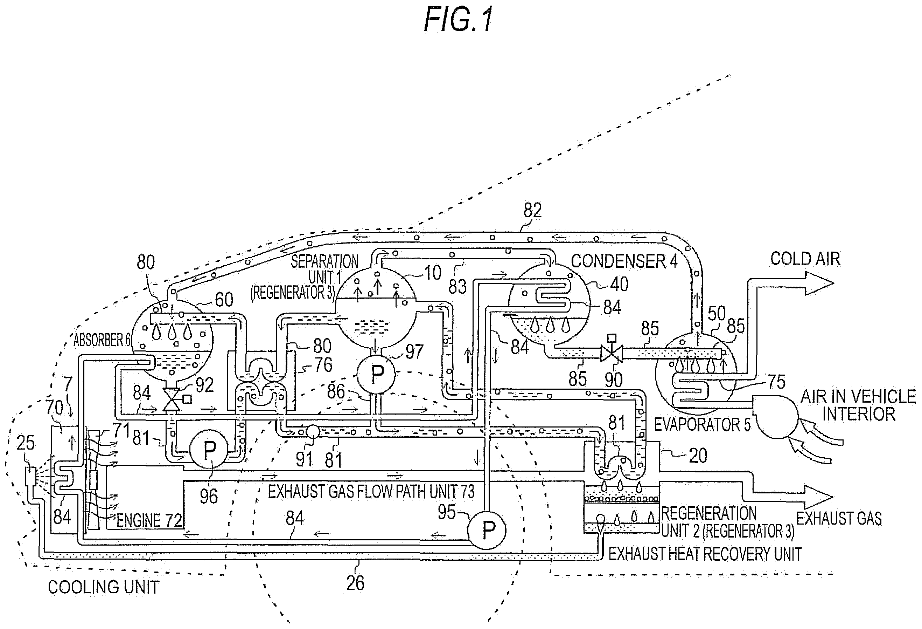

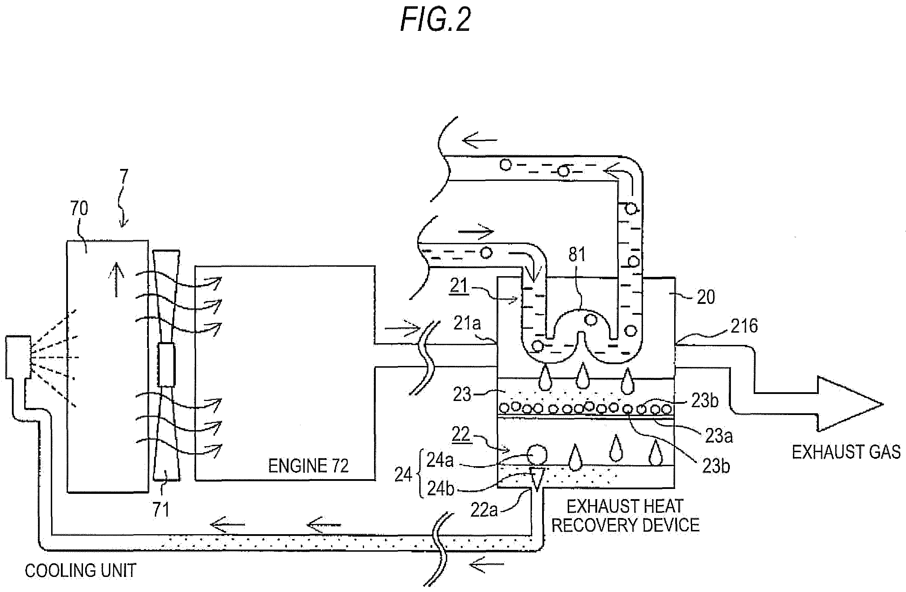

Fig. 1 is an explanatory view showing a concept of Embodiment 1, and Fig. 2 is an enlarged view of main parts of Fig. 1. As shown in Fig. 1, a composite absorption type heat pump device of Embodiment 1 is a device for a vehicle, and includes a regenerator 3 (a regeneration unit 2 and a separation unit 1), a condenser 4, an evaporator 5, an absorber 6, a cooler 7, and an exhaust gas flow path unit 73.

The exhaust gas flow path unit 73 is connected to an exhaust side of an engine 72. Exhaust gas generated in the engine 72 flows through the exhaust gas flow path unit 73. The exhaust gas flow path unit 73 is communicated with the regeneration unit 2 configuring a part of the regenerator 3 of an absorption heat pump. In addition, the cooler 7 which includes a radiator 70 and a radiator fan 71 is disposed on a front side of the engine 72 (in detail, a front side in a travelling direction of the vehicle). A flow path 84 is formed in the radiator 70. The flow path 84 corresponds to a part of a cooling flow path of the composite absorption heat pump device disclosed here, and a coolant flows through the flow path 84. A part of the flow path 84 is branched and communicated with the engine 72 to flow the coolant therein.

The regenerator 3 includes the regeneration unit 2 and the separation unit 1. The separation unit 1 will be described later. As shown in Fig. 2, the regeneration unit 2 includes an exhaust heat recovery unit and a cooling unit. The exhaust heat recovery unit includes a case 20 having a box shape, a mixed solution flow path unit 81 which is introduced in the case 20, an exchange bath unit 21 which is formed of a portion positioned in the vicinity of the mixed solution flow path unit 81 in the case 20, a solution bath unit 22 which positions in a bottom portion of the case 20, a filter unit 23 which partitions the exchange bath unit 21 and the solution bath unit 22, and a float valve 24 which is disposed on the solution bath unit 22.

The exchange unit 21 configures a part of the exhaust gas flow path unit 73, and includes an exhaust gas inlet 21a which is an inlet of the exhaust gas and an exhaust gas outlet 21b which is an outlet of the exhaust gas. Portions of the mixed solution flow path unit 81 which position outside the case 20 are communicated with the absorber 6 and the separation unit 1 which will be described later. A mixed solution of an absorbing solution which flows out from the absorber 6 and a diluent (water in the embodiment), that is, a diluted absorbing solution flows through the mixed solution flow path unit 81. The inner portion of the mixed solution flow path unit 81 and the inner portion of the case 20 (that is, the inner portion of the exchange bath unit 21) are air-tightly partitioned. Accordingly, the mixed solution which flows through the mixed solution flow path unit 81 and the exhaust gas which flows through the exchange bath unit 21 are not in direct contact with each other, and are not mixed. That is, the mixed solution and the exhaust gas in the exchange bath unit 21 are only subjected to heat exchange.

Since the absorption type heat pump of the composite absorption type heat pump device disclosed here is a so-called absorption type heat pump for single effect, a temperature of the mixed solution which flows out from the absorber 6 and flows through the mixed solution flow path unit 81 is relatively low. Accordingly, the exhaust gas which is subjected to heat exchange with the mixed solution in the exchange bath unit 21 is cooled to a temperature of less than 100°C. Thus, vapor contained in the exhaust gas at that time is condensed and condensed water is generated. The mixed solution is heated by heat (sensible heat) of the exhaust gas, and also heated by condensed heat (latent heat) at the time of generation of the condensed water. Accordingly, the composite absorption type heat pump device disclosed here recovers the sensible heat of the exhaust gas at this time, and a part of the latent heat (condensed heat). The exhaust gas which is subjected to heat exchange with the mixed solution in the exchange bath unit 21 returns to the exhaust gas flow path unit 73 through the exhaust gas outlet, and then, is exhausted to outside.

The filter unit 23 includes a meshed filter base unit 23a and a purification unit 23b formed of lime particles. The mesh of the filter base unit 23a has a degree not to pass the purification unit 23b (lime particles). The condensed water generated in the exchange bath unit 21 approaches the filter unit 23 by gravity, and comes in contact with the purification unit 23b, that is, the lime, included in the filter unit 23. Since the acid components (vitriol, nitric acid, and the like) included in the exhaust gas are dissolved in the condensed water, if the condensed water is vaporized as it is, there is a concern in that the components are deteriorated by some materials of the cooler 7 or the cooling unit. Accordingly, in the embodiment, the acid components are neutralized by the purification unit 23b of the filter unit 23, and the acid components in the condensed water are substantially removed. As a neutralizer for neutralization of the acid components, other than the lime, magnesium hydroxide, caustic soda, or the like can be preferably used. In addition, a filtration material such as activated charcoal or the like may be added in the filter unit 23.

The condensed water which passes the filter unit 23 approaches the solution bath unit 22 which positions in a lower portion of the filter unit 23, by gravity. The condensed water flows out towards the cooling unit through a condensed water outlet 22a which is formed on the solution bath unit 22.

In addition, the float valve 24 is disposed on the condensed water outlet 22a. The float valve 24 includes a floating unit 24a which floats in the condensed water collected in the solution bath unit 22, a valve unit 24b which is fixed on the floating unit 24a is movable with the floating unit 24a. The condensed water outlet 22a has an opening on a bottom portion of the solution bath unit 22 and the opening is set as an outlet of the condensed water. If the water level of the condensed water collected in the solution bath unit 22 reaches a given level or higher, the float valve 24 is raised up, and the valve unit 24b and the condensed water outlet 22a are separated, and thus, the float valve 24 opens the condensed water outlet 22a. In addition, in a case where the condensed water collected in the solution bath unit 22 does not reach a given level, the float valve 24 is fallen down, and the valve unit 24b and the condensed water outlet 22a are adjacent to each other, and thus, the float valve 24 closes the condensed water outlet 22a. The float valve 24 corresponds to on-off valve of the composite absorption type heat pump device disclosed here. In addition, in the embodiment, the float valve 24 is used as an on-off valve, however, it is not limited thereto, and various on-off valves may be used. For example, a water quantity sensor is disposed on the solution bath unit 22, a solenoid valve is disposed on the condensed water outlet 22a, and the opening and closing of the solenoid valve may be controlled, based on the water quantity (that is, quantity of the condensed water in the solution bath unit 22) sensed by the water quantity sensor. It is not limited thereto, and it is possible to open and close the condensed water outlet 22a with well-known various methods. When the quantity of the condensed water collected in the solution bath unit 22 is equal to or less than predetermined quantity, by closing the condensed water outlet 22a, the exhaust gas does not flow towards the cooling unit from the condensed water outlet 22a, even in a case of small quantity of the condensed water. In a case of small quantity of the condensed water, that is, if the exhaust gas flows to the cooling unit in a state of a relatively high temperature, there is a concern in that the cooler 7 is heated by the exhaust gas. In the embodiment, by blocking the flow path of the exhaust gas to the cooling unit from the exhaust heat recovery unit, it is possible to reliably cool the coolant by the cooler 7.

The cooling unit includes an ejector 25 which is disposed on a front side with respect to the cooler 7 in the travelling direction of the vehicle, and an infusion flow path 26 which communicates the ejector 25 and the condensed water outlet 22a. A radiator fan 71 is disposed on a front side of the ejector 25. In the embodiment, the ejector 25 and the radiator fan 71 are connected to each other, the condensed water is pumped up by negative pressure generated by rotation of the radiator fan 71, and is ejected to the radiator 70 from the ejector 25. In this case, the ejector 25 and the radiator fan 71 correspond to an infusion element of the composite absorption type heat pump device disclosed here. In addition, a mechanism of infusing the condensed water to the cooler 7 is not particularly limited thereto. For example, in place of negative pressure generated by the rotation of the radiator fan 71 described above, fluid pressure of air which acts on a vehicle body at the time of travelling of the vehicle can also be used. In this case, if an air intake duct for supplying external air to the engine 72 is connected to the ejector 25, it is possible to efficiently recover the fluid pressure described above. Alternatively, the condensed water may be directly introduced to the cooler 7 by the capillary phenomenon.

### Absorption Type Heat Pump

Hereinafter, the operation of the absorption type heat pump of the composite absorption type heat pump device of Embodiment 1 will be described. As shown in Fig. 1, the absorption type heat pump of the composite absorption type heat pump device of Embodiment 1 is configured in the substantially same manner as a general absorption heat pump, except for including the exhaust heat recovery unit and the cooler.

The absorption type heat pump (absorption type refrigerating machine) includes the regenerator 3 which includes the separation unit 1 including a separation chamber 10 and the regeneration unit 2 including the case 20, the condenser 4 including a condensing chamber 40, the evaporator 5 including an evaporation chamber 50 which is maintained in a high vacuum state, and the absorber 6 including an absorbing chamber 60. The separation chamber 10 of the separation unit 1 and the absorbing chamber 60 of the absorber 6 are communicated with each other by a flow path 80 and a flow path 81. The evaporation chamber 50 of the evaporator 5 and the absorbing chamber 60 of the absorber 6 are communicated with each other by a flow path 82. The separation chamber 10 of the separation unit 1 and the condensing chamber 40 of the condenser 4 are communicated with each other by a flow path 83. The condensing chamber 40 of the condenser 4 and the evaporation chamber 50 of the evaporator 5 are communicated with each other by a flow path 85.

As shown in Fig. 1, the flow path 84 through which cold water (coolant) which flows out from the cooler 70 flows is introduced to the condenser 4. In addition, the cooled water in the flow path 84 is circulated by a pump 95. In the condenser 4, the vapor supplied from the regenerator 3 (separation unit 1) through the flow path 83 is cooled, condensed, in the flow path 84 to change the phase to liquid phased water, and the condensed latent heat is discharged. The condensed water (that is, liquid phased water) formed in the condenser 4 is moved to the evaporator 5 through the flow path 85. A valve 90 is provided on the flow path 85, and a flow rate of the liquid phased water to be supplied to the evaporator 5 can be adjusted. In the evaporator 5, the liquid phased water is dropped down to the evaporation chamber 50 form a hole of the flow path 85, and the dropped liquid phased water reaches a heat exchanger 75. The air (coolant) in the vehicle interior flows to the heat exchanger 75. Since the inner portion of the evaporator 5 is in a vacuum atmosphere, a temperature therein is low, and a temperature of the air which flows through the heat exchanger 75 is higher compared thereto. Accordingly, the heat exchanger 75 is warmed by cold air. The liquid phased water attached on the heat exchanger 75 is warmed and becomes vapor in the evaporation chamber 50 in a high vacuum state. As described above, in the evaporator 5, the liquid phased water which is the condensed water formed in the condenser 4 is evaporated, and the phase thereof is changed to the vapor, and vaporization latent heat (endothermic action) is obtained. The heat exchanger 75 is cooled by the vaporization latent heat, and the air which flows through the heat exchanger 75 is cooled. The cooled air is transported into the vehicle interior and warmed by being subjected to heat exchange (air-conditioning action) with the air in the vehicle interior, and returned to the heat exchanger 75 again. The vapor evaporated in the evaporator 5 is supplied to the absorbing chamber 60 of the absorber 6 through the flow path 82.

In the absorber 6, the absorbing solution having high concentration is dropped down from the flow path 80 by gravity. The flow path 84 through which the cold water (coolant) which flows out from the cooler 70 flows is introduced to the absorber 6. The absorbing solution absorbs the vapor (diluent) in the absorbing chamber 60, discharges heat to the coolant, and becomes the diluted absorbing solution (mixed solution). The diluted absorbing solution flows into the flow path 81, flows through a solution-solution heat exchanger 76, and is subjected to heat exchange with absorbing solution which flows out from the separation unit 1 and flows through the flow path 80. A temperature of the diluted absorbing solution which flows through the flow path 81 is lower than a temperature of the absorbing solution which flows out from the separation unit 1 of the regenerator 3 and flows through the flow path 80. The flow path 81 corresponds to the mixed solution flow path unit of the composite absorption type heat pump device disclosed here. The diluted absorbing solution which flows through the flow path 81 is infused by a pump 96.

Then, the diluted absorbing solution which passes the solution-solution heat exchanger 76 is moved to the regeneration unit 2 of the regenerator 3. The diluted absorbing solution which is moved to the case 20 of the regeneration unit 2 is subjected to heat exchange with the exhaust gas, is heated, and is moved to the separation chamber 10 of the separation unit 1. The heated diluted absorbing solution is separated into an absorbing solution and vapor in the separation chamber 10. Vapor among them is supplied to the condenser 4 from the flow path 83. By separating the vapor, the diluted absorbing solution is concentrated. Accordingly, the absorbing solution with high concentration remains in the separation chamber 10. The absorbing solution with high concentration flows into the flow path 80 from the separation chamber 10, flows through the solution-solution heat exchanger 76, is subjected to heat exchange with the diluent absorbing solution which flows through the flow path 81 (is cooled by the diluent absorbing solution), and is returned to the absorber 6.

As described above, in the absorption type heat pump, the heat generated in the condenser 4 and the absorber 6 is released and the heat is recovered in the regenerator 2. In addition, the endothermic action (cooling action) is obtained by vaporization latent heat generated in the evaporator 5.

In addition, in the composite absorption type heat pump device of Embodiment 1, the separation unit 1 and the flow path 81 are short-cut by a flow path 86. A pump 97 is provided on the flow path 86. In addition, a valve 91 is provided on the flow path 80.

When the temperature of the diluted absorbing solution is low, for example, immediately after the start of driving, it is necessary to significantly raise the temperature of the diluted absorbing solution for operating the absorption type heat pump. In this case, it is possible to rapidly raise the temperature of the diluted absorbing solution only be operating the pump 97. In addition, at the time of normal driving of the absorption type heat pump, it is preferable to send a predetermined amount of mixed solution corresponding to the flow rate of the absorbing solution in the system by the pump 96. In a case of large amount of heat in the exhaust gas, by additionally sending the mixed solution by the pump 97, it is possible to send the mixed solution having the flow rate corresponding to the fluctuation of the amount of heat in the exhaust gas, and to control the amount of heat to be recovered in the exhaust heat recovery unit. In addition, a backflow valve 91 is disposed on the flow path 81 between the pump 96 and the pump 97. The backflow of the mixed solution which is sent from the pump 97 to the pump 96 is prevented by the backflow valve 91.

### Others

This disclosure is not limited to the embodiment described above and shown in the drawings, and variations can be suitably performed without departing from the scope of the invention which is solely defined by the appended claims. For instance, as exemplified in the attachment described below, the composite absorption type heat pump device disclosed here can be realized as an engine-absorption type heat pump composite unit including an engine. In this case, as described above, the engine may be the engine for a vehicle which is mounted on an engine-powered car or a hybrid car, or may be the engine for power generation system installed in the building. In addition, in such an engine-absorption type heat pump composite unit, the constituent elements other than engine are preferable to be configured in the same manner as the composite absorption type heat pump device disclosed here.

### Appendix 1

An engine-absorption type heat pump composite unit, including: an engine; an exhaust gas flow path unit through which exhaust gas of an engine flows; a regenerator which includes a regeneration unit which heats a mixed solution of an absorbing solution and a diluent by the exhaust gas, and separates the mixed solution heated in the regeneration unit into the diluent having a gas phase and the absorbing solution having a liquid phase; a condenser which includes a cooling path through which a coolant flows, and condenses the diluent to obtain the diluent having a liquid phase by performing heat exchange of the dilute having a gas phase obtained in the regenerator and the coolant; an evaporator which evaporates the diluent having a liquid phase obtained in the condenser to obtain the diluent having a gas phase; an absorber which causes the diluent to absorb the absorbing solution to obtain the mixed solution and supplies the obtained mixed solution to the regenerator, by bringing the absorbing solution having a liquid phase obtained in the regenerator to be in contact with the diluent having a gas phase obtained in the evaporator; and a cooler which cools the coolant by performing heat exchange of the coolant which flows through the cooling path and external gas, in which the regeneration unit includes an exhaust heat recovery unit which includes an exchange unit which is communicated with the exhaust gas flow path unit and to which the exhaust gas flows in, and a mixed solution flow path unit which is thermally connected to the exchange unit and through which the mixed solution flows, and heats the mixed solution by performing heat exchange of the exhaust gas and the mixed solution and condenses vapor contained in the exhaust gas to obtain a condensed water, and a cooling unit which evaporates the condensed water obtained in the exhaust heat recovery unit, in the cooler.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention. Accordingly, it is expressly intended that all such variations, changes and equivalents which fall within the scope of the present invention as defined in the claims, be embraced thereby.

## Claims

1. A composite absorption type heat pump device, comprising:
an exhaust gas flow path unit (73) through which exhaust gas of an engine (72) flows;
a regenerator (3) which includes a regeneration unit (2) which heats a mixed solution of an absorbing solution and a diluent by the exhaust gas, and separates the mixed solution heated in the regeneration unit (2) into the diluent having a gas phase and the absorbing solution having a liquid phase;
a condenser (4) which includes a cooling path (84) through which a coolant flows, and condenses the diluent to obtain the diluent having a liquid phase by performing heat exchange of the dilute having a gas phase obtained in the regenerator (3) and the coolant;
an evaporator (5) which evaporates the diluent having a liquid phase obtained in the condenser to obtain the diluent having a gas phase;
an absorber (6) which causes the diluent to absorb the absorbing solution to obtain the mixed solution and supplies the obtained mixed solution to the regenerator (3), by bringing the absorbing solution having a liquid phase obtained in the regenerator (3) in contact with the diluent having a gas phase obtained in the evaporator (5); and
a cooler (7) which cools the coolant by performing heat exchange of the coolant which flows through the cooling path (84) and external air,
**characterized in that** the regeneration unit (2) includes
an exhaust heat recovery unit which includes an exchange unit (21) which is communicated with the exhaust gas flow path unit (73) and to which the exhaust gas flows in, and a mixed solution flow path unit (81) which is thermally connected to the exchange unit (21) and through which the mixed solution flows, and heats the mixed solution by performing heat exchange of the exhaust gas and the mixed solution and condenses vapor contained in the exhaust gas to obtain a condensed water, and
a cooling unit which evaporates the condensed water obtained in the exhaust heat recovery unit (2), in the cooler (7).

2. The composite absorption type heat pump device according to Claim 1,
wherein the exhaust heat recovery unit includes a condensed water outlet (22a) which is an outlet of the condensed water, and an on-off valve capable of opening and closing the condensed water outlet, and
the on-off valve (24) closes the condensed water outlet (22a), when an amount of the condensed water in the exhaust heat recovery unit is equal to or less than a predetermined amount.

3. The composite absorption type heat pump device according to Claim 1 or 2,
wherein the exhaust heat recovery unit includes a filter unit (23) for eliminating acid components contained in the exhaust gas and dissolved in the condensed water, in a flow path of the condensed water.

4. The composite absorption type heat pump device according to any one of Claims 1 to 3,
wherein the cooling unit includes an infusion element which transports the condensed water to the cooler (7), and
the infusion element transports the condensed water by a capillary phenomenon.

5. The composite absorption type heat pump device according to any one of Claims 1 to 3,
wherein the cooler (7) includes a fan (71) for taking in the external air,
the cooler includes an infusion element which transports the condensed water to the cooler, and the infusion element transports the condensed water to the cooler by dynamic pressure of the fan (71).

6. The composite absorption type heat pump device according to any one of Claims 1 to 3,
wherein the composite absorption type heat pump device is a composite absorption type heat pump device for a vehicle, and includes an air intake duct which takes in external air,
the cooling unit includes an infusion element which transports the condensed water to the cooler (7), and
the infusion element transports the condensed water to the cooler (7) by hydrostatic pressure of air generated in the air intake duct at the time of travelling.

## Patentansprüche

1. Verbundabsorptionswärmepumpenvorrichtung mit:
einer Abgasströmungspfadeinheit (73), durch die Abgas einer Brennkraftmaschine (72) strömt;
einem Regenerator (3), der eine Regenerierungseinheit (2) aufweist, die ein Lösungsgemisch aus einer Absorptionslösung und einem Verdünnungsmittel mithilfe des Abgases erwärmt, und der das in der Regenerierungseinheit (2) erwärmte Lösungsgemisch in das gasförmige Verdünnungsmittel und die flüssige Absorptionslösung trennt;
einem Kondensator (4), der einen Kühlpfad (84) aufweist, durch den ein Kühlmittel strömt, und der das gasförmige Verdünnungsmittel aus dem Regenerator (3) durch Wärmeaustausch mit dem Kühlmittel kondensiert, sodass das flüssige Verdünnungsmittel erhalten wird;
einem Verdampfer (5), in dem das im Kondensator (4) flüssig gewordene Verdünnungsmittel verdampft, sodass das gasförmige Verdünnungsmittel erhalten wird;
einem Absorber (6), der die Absorptionslösung, die im Regenerator (3) flüssig geworden ist, in Kontakt mit dem im Verdampfer (5) gasförmig gewordenen Verdünnungsmittel bringt, sodass das Absorbieren der Absorptionslösung durch das Verdünnungsmittel bewirkt wird, wodurch das Lösungsgemisch erhalten wird, und das erhaltene Lösungsgemisch dem Regenerator (3) zuführt; und
einem Kühler (7), der das Kühlmittel durch Wärmeaustausch zwischen dem Kühlmittel, das durch den Kühlpfad (84) strömt, und Außenluft kühlt,
**dadurch gekennzeichnet, dass** die Regenerierungseinheit (2) aufweist:
eine Abgaswärmerückgewinnungseinheit, die eine Austauscheinheit (21), in die das Abgas durch die damit verbundene Abgasströmungspfadeinheit (73) strömt, und eine Lösungsgemischströmungspfadeinheit (81), die thermisch mit der Austauscheinheit (21) verbunden ist und durch die das Lösungsgemisch strömt, aufweist und durch Wärmeaustausch zwischen dem Abgas und dem Lösungsgemisch das Lösungsgemisch erwärmt und im Abgas enthaltenen Wasserdampf zu Wasser kondensiert, und
eine Kühleinheit, die das kondensierte Wasser aus der Abgaswärmerückgewinnungseinheit (2) in dem Kühler (7) verdampft.

2. Verbundabsorptionswärmepumpenvorrichtung nach Anspruch 1,
wobei die Abgaswärmerückgewinnungseinheit einen Kondenswasserauslass (22a) für das kondensierte Wasser und ein Schaltventil (24) enthält, das den Kondenswasserauslass (22a) öffnen und schließen kann, und
das Schaltventil (24) den Kondenswasserauslass (22a) schließt, wenn eine Kondenswassermenge in der Abgaswärmerückgewinnungseinheit eine vorbestimmte Menge erreicht oder unterschreitet.

3. Verbundabsorptionswärmepumpenvorrichtung nach einem der Ansprüche 1 und 2,
wobei die Abgaswärmerückgewinnungseinheit in einem Strömungspfad des Kondenswassers eine Filtereinheit (23), die zur Beseitigung saurer Komponenten dient, die sich aus dem Abgas in das Kondenswasser gelöst haben, aufweist.

4. Verbundabsorptionswärmepumpenvorrichtung nach einem der Ansprüche 1-3,
wobei die Kühleinheit ein Infusionselement aufweist, das das Kondenswasser durch Kapillarwirkung zu dem Kühler (7) transportiert.

5. Verbundabsorptionswärmepumpenvorrichtung nach einem der Ansprüche 1-3,
wobei der Kühler (7) einen Lüfter aufweist, um die Außenluft aufzunehmen, und
der Kühler (7) ein Infusionselement aufweist, das das Kondenswasser mittels des durch den Lüfter (71) bewirkten dynamischen Drucks zu dem Kühler (7) transportiert.

6. Verbundabsorptionswärmepumpenvorrichtung nach einem der Ansprüche 1-3,
wobei die Verbundabsorptionswärmepumpenvorrichtung für ein Fahrzeug verwendet wird und eine Luftansaugleitung aufweist, die Außenluft aufnimmt,
die Kühleinheit ein Infusionselement enthält und
das Infusionselement das Kondenswasser mittels des hydrostatischen Luftdrucks, der in der Luftansaugleitung während der Fahrt erzeugt wird, zu dem Kühler (7) transportiert.

## Revendications

1. Dispositif de pompe à chaleur du type à absorption composite, comprenant :
une unité de trajet d'écoulement de gaz d'échappement (73) à travers laquelle du gaz d'échappement d'un moteur (72) s'écoule ;
un régénérateur (3) qui comprend une unité de régénération (2) qui chauffe une solution mixte d'une solution absorbante et d'un diluant par le gaz d'échappement et sépare la solution mixe chauffée dans l'unité de régénération (2) en diluant ayant une phase gazeuse et en solution absorbante ayant une phase liquide ;
un condenseur (4) qui comprend un trajet de refroidissement (84) à travers lequel un réfrigérant s'écoule et condense le diluant pour obtenir le diluant ayant une phase liquide en effectuant un échange thermique du produit dilué ayant une phase gazeuse obtenu dans le régénérateur (3) et le réfrigérant ;
un évaporateur (5) qui évapore le diluant ayant une phase liquide obtenu dans le condenseur pour obtenir le diluant ayant une phase gazeuse ;
un absorbeur (6) qui amène le diluant à absorber la solution absorbante pour obtenir la solution mixte et fournit la solution mixte obtenue au régénérateur (3) en amenant la solution absorbante ayant une phase liquide obtenue dans le régénérateur (3) en contact avec le diluant ayant une phase gazeuse obtenue dans l'évaporateur (5) ; et
un refroidisseur (7) qui refroidit le réfrigérant en effectuant un échange thermique entre le réfrigérant qui s'écoule à travers le trajet de refroidissement (84) et l'air externe,
**caractérisé en ce que** l'unité de régénération (2) comprend
une unité de récupération de chaleur d'échappement qui comprend une unité d'échange (21) qui est mise en communication avec l'unité de trajet d'écoulement de gaz d'échappement (73) et dans laquelle le gaz d'échappement s'écoule, et une unité de trajet d'écoulement de solution mixte (81) qui est raccordée au plan thermique à l'unité d'échange (21) et à travers laquelle la solution mixte s'écoule, et chauffe la solution mixte en effectuant un échange thermique du gaz d'échappement et de la solution mixte et condense la vapeur contenue dans le gaz d'échappement pour obtenir une eau condensée, et
une unité de refroidissement qui évapore l'eau condensée obtenue dans l'unité de récupération de chaleur d'échappement (2), dans le refroidisseur (7).

2. Dispositif de pompe à chaleur du type à absorption composite selon la revendication 1,
dans lequel l'unité de récupération de chaleur d'échappement comprend une sortie d'eau condensée (22a) qui est une sortie de l'eau condensée et une soupape de marche-arrêt capable d'ouvrir et de fermer la sortie d'eau condensée et
la soupape de marche-arrêt (24) ferme la sortie d'eau condensée (22a) lorsqu'une quantité de l'eau condensée dans l'unité de récupération de chaleur d'échappement est égale ou inférieure à une quantité prédéterminée.

3. Dispositif de pompe à chaleur du type à absorption composite selon la revendication 1 ou 2,
dans lequel l'unité de récupération de chaleur d'échappement comprend une unité filtrante (23) pour éliminer les composants acides contenus dans le gaz d'échappement et dissous dans l'eau condensée, dans un trajet d'écoulement de l'eau condensée.

4. Dispositif de pompe à chaleur du type à absorption composite selon l'une quelconque des revendications 1 à 3,
dans lequel l'unité de refroidissement comprend un élément d'infusion qui transporte l'eau condensée au refroidisseur (7) et
l'élément d'infusion transporte l'eau condensée par un phénomène capillaire.

5. Dispositif de pompe à chaleur du type à absorption composite selon l'une quelconque des revendications 1 à 3,
dans lequel le refroidisseur (7) comprend un ventilateur (71) pour aspirer l'air externe,
le refroidisseur comprend un élément d'infusion qui transport l'eau condensée au refroidisseur et
l'élément d'infusion transporte l'eau condensée au refroidisseur par pression dynamique du ventilateur (71).

6. Dispositif de pompe à chaleur du type à absorption composite selon l'une quelconque des revendications 1 à 3,
dans lequel le dispositif de pompe à chaleur du type à absorption composite est un dispositif de pompe à chaleur du type à absorption composite pour un véhicule et comprend un conduit d'admission d'air qui prélève de l'air externe,
l'unité de refroidissement comprend un élément d'infusion qui transporte l'eau condensée au refroidisseur (7) et
l'élément d'infusion transporte l'eau condensée au refroidisseur (7) par pression hydrostatique de l'air généré dans le conduit d'admission d'air au moment du déplacement.
